# EUROPEAN PATENT SPECIFICATION

(11) **EP 3 335 989 B1**
(45) Date of publication and mention of the grant of the patent: **07.09.2022**
(21) Application number: 16834684.9
(22) Date of filing: 12.08.2016
(51) Int. Cl.: B64C 27/30, B64C 29/00

(54) **VERTICAL TAKE-OFF AND LANDING FIXED-WING AIRCRAFT AND THE FLIGHT CONTROL METHOD THEREOF**
SENKRECHTSTARTENDE UND -LANDENDE STARRFLÜGELFLUGZEUGE UND DEREN FLUGSTEUERUNGSVERFAHREN
AÉRONEF À VOILURE FIXE À DÉCOLLAGE ET ATTERRISSAGE VERTICAUX ET SON PROCÉDÉ DE COMMANDE DE VOL

(30) Priority: 12.08.2015 CN 201520605032 U
(43) Date of publication of application: 20.06.2018
(73) Proprietor: Shanghai Fukun Aviation Technology Co., Ltd, Pudong New Area Shanghai 200120 (CN)
(72) Inventor: LIU, Shiyi, Shanghai 200124 (CN); XIE, Ling, Shanghai 200124 (CN)
(74) Representative: HGF
(86) International application number: PCT/CN2016/094826
(87) International publication number: WO 2017/025060

(56) References cited:
- EP-A1- 2 669 195
- CA-A1- 2 802 389
- CN-A- 101 602 403
- CN-A- 103 171 764
- CN-A- 103 171 764
- CN-U- 205 113 706
- DE-A1-102012 010 937
- DE-A1-102012 020 498
- US-A- 3 515 500
- US-A- 4 691 878
- US-A1- 2010 072 325
- US-B1- 6 622 962

## Description

### TECHNICAL FIELD

The present invention relates to a field of aircraft, in particular to a vertical take-off and landing (VTOL) fixed-wing aircraft.

### BACKGROUND

It is known that fixed-wing aircraft can generate a lift force itself by its wings moving through airflow, allowing for high speed and long flight, heavy loaded and efficiency, whereas it needs a long airstrip, and cannot hover overhead. Rotorcraft uses lift force generated by rotary wings, and can be thrust horizontally by controlling the pitching angle of the rotary wings. The merit of rotorcraft includes a simple structure, being able of vertical take-off and landing and being able of hover in the air, whereas the shortage includes low speed, short range, light loaded and low efficiency.

Therefore, it is desirable to combine the merits of fixed-wing aircraft and rotorcraft with many attempts.

V22 Osprey in US uses the tiltrotor technical solution. The aircraft is in a rotorcraft mode capable of vertical take-off and landing while rotary plane of the rotary wings is horizontal. When the aircraft needs a horizontal movement, their rotary plane of the rotary wings tilts to a vertical direction so that the thrust force is generated by the rotary wings.

Another VTOL aircraft is a tail-sitter type, i.e. the aircraft tilts vertically, takes off and lands on its tail while the rotary plane of the rotary wings is parallel to ground, and the rotary wings provides a lift force, then the aircraft tilts horizontally for forward flight while the rotary plane of the rotary wings is vertical to ground, and the rotary wings provides a thrust force.

Under the constraints that the capacity of the battery is limited, the problem we are facing is how to enhance the load capacity, the airborne time and the range of aircraft, especially an unmanned aerial vehicle. Although existing design provides a solution as to vertical take-off and landing of fixed-wing aircraft, it is not an optimal solution of energy efficiency as the rotary wings require peculiarly contrary design in the aspect about energy efficiency when being used for horizontal thrust or vertical take-off and landing, that is, the rotary wings for horizontal thrust require small diameter, small pitch and small thrust, whereas the rotary wings for vertical take-off and landing require larger diameter, larger pitch and larger thrust. Existing tiltrotor and tail-sitter type solutions take both thrust and hover into account, resulting in a non-optimal status both operations in the aspect about energy efficiency.

Examples of prior art can be found in the German patent application DE 102 012 010 937, which describes an aircraft which comprises a fuselage, a bearing area, and two drive rotors, where the thrust direction of first drive rotor is arranged more temporarily in the horizontal direction; and in another German patent application DE 102 012 020 498, which describes an aircraft which has a pair of drive rotors that are provided in a horizontal thrust direction and a vertical thrust direction, wherein the drive rotor is pivotably secured at a pivotal arm, such that the driver rotor is pivoted from a first position into a second position.

### SUMMARY OF THE INVENTION

The problem of the invention is to provide a vertical take-off and landing fixed-wing aircraft. The invention may operate not only in high-speed cruise mode but also in vertical take-off and landing mode, and can achieve optimal energy efficiency in both modes.

Technical solution of the present invention is disclosed in claim 1.

Further optional features according to the claimed invention are disclosed in the dependent claims 2-8.

It should be noted that,
The preceding words "first", "second" do not represent specific quantity or order, merely for the purpose of distinguishing parts' names.

The advantages or principle of the invention is as follows,
1. When the fixed-wing aircraft takes off, lands or hovers, the doors open, and the deployable supporting mechanism is spread by act of the driving mechanism, thereby the vertical lifers will be working outside the storage room to provide the aircraft with large lift force in vertical direction; during the high speed cruise, the deployable supporting mechanism is gathered within the storage room, by act of the driving mechanism, that time the doors close, and the thruster works so as to make the aircraft to achieve a high efficiency and long range due to fully utilization of the aerodynamic efficiency of the fixed-wing.
2. In the open state, at least two vertical lifters are located on both sides of the fuselage, to provide a lift force for the aircraft during vertical take-off and landing or hover; if only two vertical lifters are provided on both sides of the fuselage, it is necessary to utilize a thruster with tiltable structure to control the flight attitude in vertical direction.
3. The deployable supporting mechanism comprises a first supporting arm, and two vertical lifters are mounted to both ends of the first supporting arm respectively so that the lift requirement can be perfectly met with simple structure.
4. The middle parts of the first supporting arm and the second supporting arm are all hinged to a hinge shaft such that the first supporting arm and the second supporting arm form an "X" shape, such structure has the following advantages.
   A. When the first supporting arm and the second supporting arm are parallel, they are in a closed state, that is, the supporting arms and the vertical lifters thereon are located in the storage room; when the first supporting arm and the second supporting arm are arranged at a certain angle, they are in an open state, and the vertical lifters will be outside the storage room; the "X" shaped structure is simple and facilitate gathering and spreading;
   B. The hinge portions of the first supporting arm and the second supporting arm will bear a large bending moment. Such "X" shaped structure thereof ensure sufficient bending strength and rigidity in the hinged portion of the first supporting arm and the second supporting arm;
   C. Such "X" shaped structure formed by both the first supporting arm and the second supporting arm allows larger expanded plane during the open state and smaller compact space during closed state.
5. Each of the first supporting arm and the second supporting arm comprises the hinge segment, the first end arm and the second end arm, the first end arm and the second end arm are arranged on opposite sides of the hinge shaft, ensuring the first supporting arm and the second supporting arm to be parallel during the closed state, to avoid more space being occupied due to incomplete gather thereof.
6. The first supporting arm and the second supporting arm all have a thickness, thus they cannot be in a same plane when they are hinge-jointed, which will affect the stability of the aircraft when it is vertically raised. During the installation, two vertical lifters on the first supporting arms are mounted on the bottom surface of the ends of the first supporting arms, and two vertical lifters on the second supporting arms are mounted on the top surface of the ends of the second supporting arms. This installation arrangement can ensure the four vertical lifters being in a same horizontal plane to improve the stability of the aircraft.
7. Positive stops are provided about the first supporting arm and the second supporting arm to limit the location of the first supporting arm and the second supporting arm when the first supporting arm and the second supporting arm are spread out, so that the reliability of the aircraft is guaranteed during flight.
8. The first supporting arm and the second supporting arm are all provided with a first pin and a second pin respectively, the driving mechanism may act on the first pin and the second pin that located on two opposite sides of the hinge shaft, then the first supporting arm can rotate in reverse relative to the second supporting arm to implement their gather or spread.
9. The driving mechanism comprises a rotator, a slider and a guider, when the rotator rotates, the finger pushes the slider to slide in horizontal direction along the guider, whereby the first pin and the second pin bring the first supporting arm and the second supporting arm to spread out or gather together..
10. The hinge shaft comprises an outer shaft fixed to the first supporting arm and an inner shaft fixed to the second supporting arm, the sleeve structure of the outer shaft has a larger thrust surface, which can reduce the possibility of skew or distortion between the first supporting arm and the second supporting arm. Such sleeve structure is very important to ensure the reliability of the hinge portions.
11. Two doors are located on opposite sides of the fuselage to facilitate the deployable supporting mechanism gathering together and spreading out.

### BRIEF DESCRIPTION OF DRAWINGS

Fig. 1 is a bottom, perspective view of a VTOL fixed-wing aircraft according to a first embodiment of the present invention, during high speed cruise;
Fig. 2 is a structural view of the aircraft of Fig. 1, wherein doors in the aircraft are not shown;
Fig. 3 is a top, perspective view of the VTOL fixed-wing aircraft according to a first embodiment of the present invention, during vertical take-off or landing, or hover;
Fig. 4 is a bottom, perspective view of the VTOL fixed-wing aircraft according to a first embodiment of the present invention, during vertical take-off or landing, or hovering;
Fig. 5 is an explored view of a deployable supporting mechanism and a driving mechanism according to a first embodiment of the present invention;
Fig. 6 is a schematic view of the deployable supporting mechanism and the driving mechanism in an open state, according to a first embodiment of the present invention;
Fig. 7 is a schematic view of the deployable supporting mechanism and the driving mechanism in a closed state, according to a first embodiment of the present invention;
Fig. 8 is an installation structural view of the deployable supporting mechanism and a vertical lifter in a closed state, according to a first embodiment of the present invention;
Fig. 9 is a structural view of a door in a closed state, according to a first embodiment of the present invention;
Fig. 10 is a structural view of a door in an open state, according to a first embodiment of the present invention;
Fig. 11 is a top, perspective view of a VTOL fixed-wing aircraft according to a second embodiment of the present invention, during vertical take-off, landing or hover;

In the drawings and in the detailed part of the description, the following reference numerals have been used:
- 10: fuselage
- 11: fixed-wing
- 12: thruster
- 121: horizontal rotation shaft
- 13: storage room
- 14: door
- 141: hinge
- 142: door driving mechanism
- 143: active connecting rod
- 144: passive connecting rod
- 145: frame
- 15: horizontal stabilizers
- 16: vertical stabilizers
- 21: first supporting arm
- 211: first pin
- 22: second supporting arm
- 221: second pin
- 23: hinge shaft
- 231: outer shaft
- 232: inner shaft
- 24: hinge segment
- 25: first end arm
- 26: second end arm
- 30: driving mechanism
- 31: rotator
- 311: finger
- 32: slider
- 321: first slide element
- 322: second slide element
- 323: slot
- 33: guider
- 40: vertical lifter
- 41: installation base
- 42: rotary wing

### DETAILED DESCRIPTION OF PREFERRED EMBODIMENTS

The present invention will be described hereinafter with reference to the following embodiments and figures.

### Embodiment 1

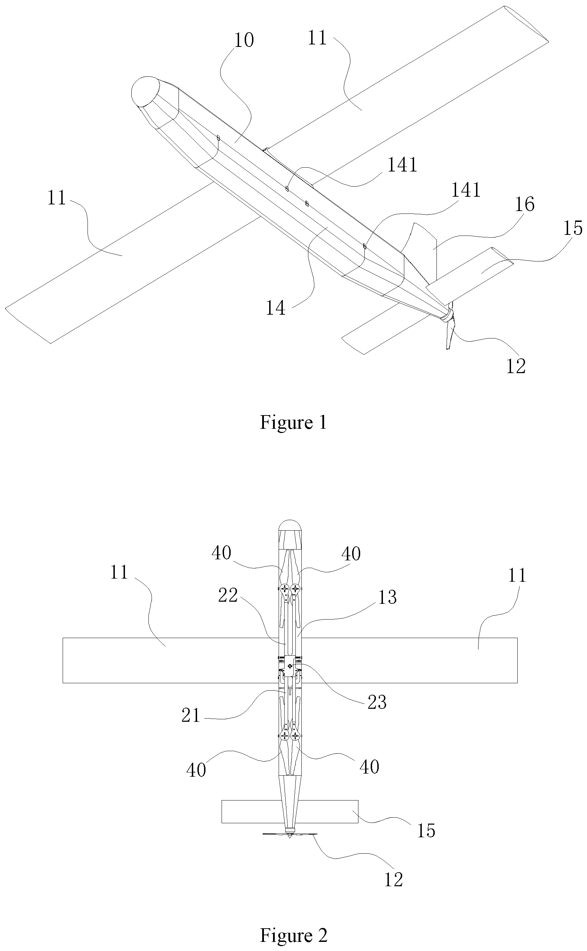

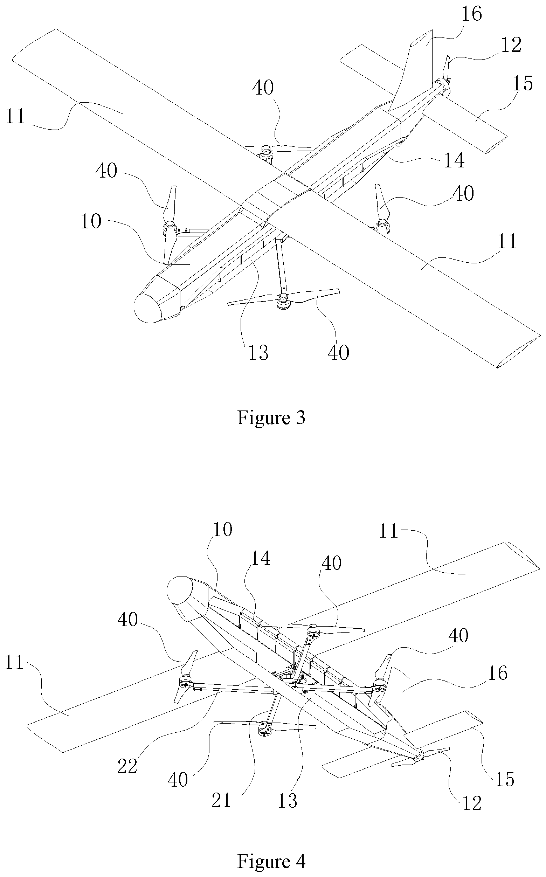

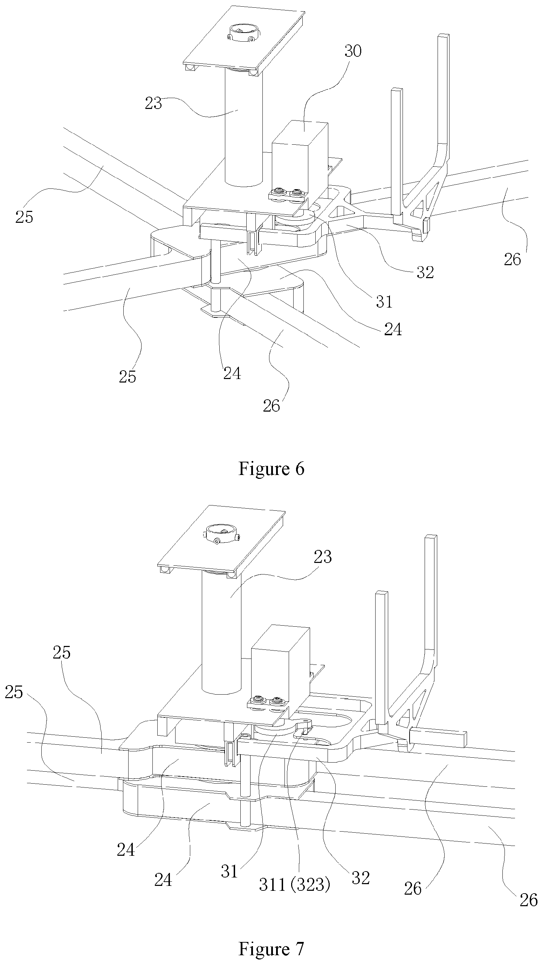

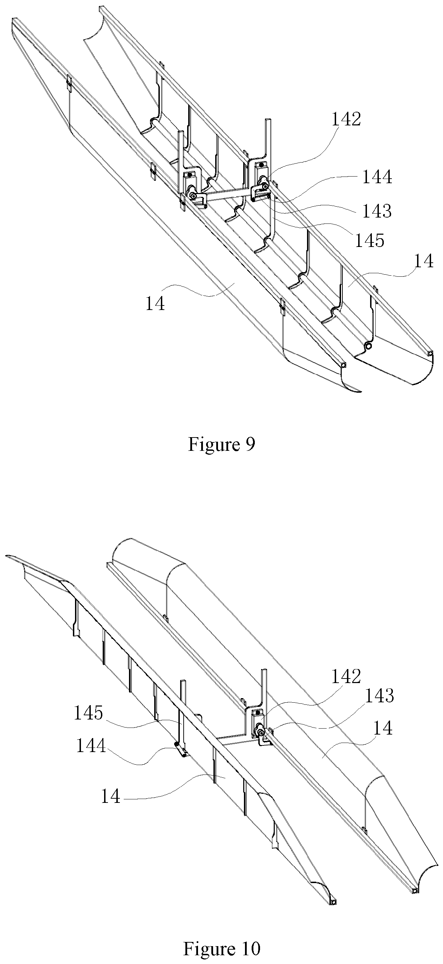

Referring to Fig. 1-10, a VTOL fixed-wing aircraft having a routine layout, comprises a fuselage 10, fixed-wings 11 arranged at the front part of the fuselage 10, horizontal stabilizers 15 and a vertical stabilizer 16 all arranged at the back end of the fuselage 10, and a thruster 12 configured behind the vertical stabilizer 16. A storage room 13 is configured inside the fuselage 10, a plurality of openings and their corresponding doors are configured on the fuselage 10, wherein the openings are connected to the storage room 13. A driving mechanism 30, and a deployable supporting mechanism driven by the driving mechanism 30 are arranged inside the storage room 13 of the fuselage, and the outer ends of the deployable supporting mechanism are provided with vertical lifters 40. The fixed-wing aircraft can be in an open state and a closed state. In the open state, the doors 14 open, and the vertical lifters 40 spread out outside the storage room 13, through the doors 14, by act of the deployable supporting mechanism. In the closed state, the vertical lifters 40 are located within the storage room 13 by act of the deployable supporting mechanism while the doors 14 closed.

Two doors 14 are located on both sides of the fuselage 10 respectively. Door driving mechanisms 142 are mounted on the fuselage 10, a L-shaped active connecting rod 143 and a passive connecting rod 144 are arranged between the door 14 and the door driving mechanism 142. Each door 14 is provided with a frame 145 connected to the passive connecting rod 144, and is hinged to the fuselage 10 by a hinge 141.

The deployable supporting mechanism comprises a first supporting arm 21 and a second supporting arm 22, the middle parts of both the first and second supporting arms 21, 22 are both movably hinged to a hinge shaft 23 mounted on the fuselage 10, to form an "X" shape, all ends of both the first supporting arm 21 and the second supporting arm 22 are provided with the vertical lifters 40, which means there are four vertical lifters 40 thereon.

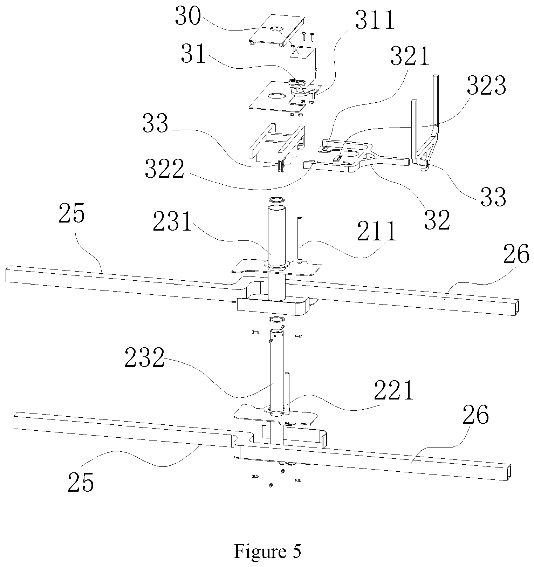

Referring to Figs. 5-8, each of the first supporting arm 21 and the second supporting arm 22 are arranged with a hinge segment 24, a first end arm 25 and a second end arm 26, and the first supporting arm 21 and the second supporting arm 22 are hinge-jointed via the hinge shaft 23 at their hinge segments 24. The first end arm 25 and the second end arm 26 are arranged on opposite sides of the hinge segment 24 respectively. The extension lines of the first and second end arms 25, 26 of the first supporting arm 21 are located on opposite sides of the hinge shaft 23, so do the extension lines of the first and second end arms 25, 26 of the second supporting arm 22; the extension lines of the first end arm 25 of both the first and second supporting arms 21, 22 are located on opposite sides of the hinge shaft 23, so do the extension lines of the second end arm 26 of both the first and second supporting arms 21, 22.

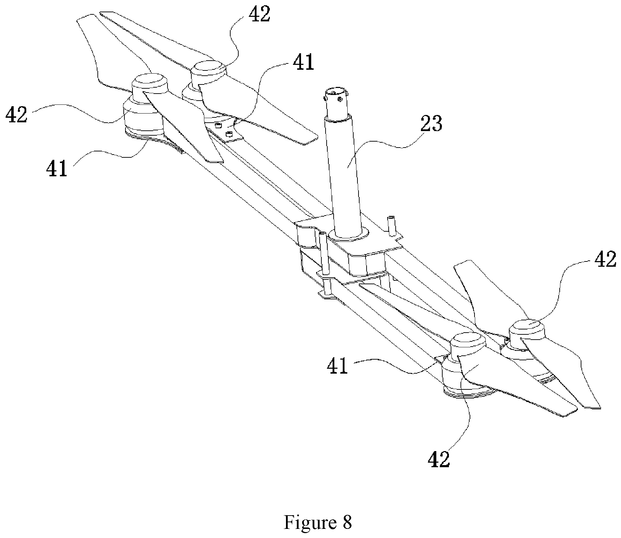

The hinge segment 24 of the first supporting arm 21 is located above the hinge segment 24 of the second supporting arm 22, and each of the first supporting arm 21 and the second supporting arm 22 includes an upper surface and a lower surface. The vertical lifter 40 includes an installation base 41 and a rotary wing 42 that fixed on the installation base 41. The installation bases 41 of two vertical lifters 40 on the first supporting arms 21 are mounted on the lower surface of the first supporting arm 21 and extend out of the outer ends of the first supporting arm, corresponding rotary wings 42 are fixed on the extended portion of the installation bases 41. The installation bases 41 of two vertical lifters 40 on the second supporting arms 22 are mounted on the upper surface of the second supporting arm 22 and extend out of the outer ends of the second supporting arm, corresponding rotary wings 42 are fixed on the extended portion of the installation bases 41. (see Fig. 8).

The first supporting arm 21 and the second supporting arm 22 are provided with a first pin 211 and a second pin 221 respectively, and the first pin 211 and the second pin 221 are located on opposite sides of the hinge shaft 23. Positive stops comprise the first pin 211 and the second pin 221. The first pin 211 and the second pin 221 are used to localize between the first supporting arm 21 and the second supporting arm 22, for instance, in the stop state, the first supporting arm 21 and the second supporting arm 22 are spread out maximumly.

The driving mechanism 30 includes a rotator 31, a slider 32 and a guider 33. The rotator 31 and the guider 33 are arranged on the fuselage 10. The slider 32 is slid-fitted with the guider 33. The slider 32 is provided with a slot 323, and the rotator 31 is provided with a finger 311 which is inserted into the slot 323 and is deviated from the rotary axis of the rotator 31. A first slide element 321 and a second slide element 322 are arranged on the slider 32, the first pin 211 and the second pin 221 are inserted into the first slide element 321 and the second slide element 322 respectively. The hinge shaft 23 comprises an outer shaft 231 fixed to the first supporting arm 21, and an inner shaft 232 fixed to the second supporting arm 22, the outer shaft 231 is sleeved on the inner shaft 232.

The fixed-wings 11 are located on both sides of the fuselage 10, and the hinge shaft 23 is located near the back portion of the fixed-wing 11. In the open state, two vertical lifters 40 are located ahead of the fixed-wings 11.

This embodiment has the following advantages:
1. When the fixed-wing aircraft takes off, lands or hovers, the doors 14 open, and the deployable supporting mechanism is spread by act of the driving mechanism 30, thereby the vertical lifers 40 will be working outside the storage room 13 to provide the aircraft with large lift force in vertical direction; during the high speed cruise, the deployable supporting mechanism is gathered within the storage room 13, by act of the driving mechanism 30, that time the doors 14 close, and the thruster 12 works so as to make the aircraft to achieve a high efficiency and long range due to fully utilization of the aerodynamic efficiency of the fixed-wing 11.
2. In the open state, four vertical lifters 40 are located on both sides of the fuselage 10, to provide a lift force for the aircraft during vertical take-off and landing or hover, with a higher stability.
3. The deployable supporting mechanism comprises a first supporting arm 21, and two vertical lifters 40 are mounted to both ends of the first supporting arm 21 respectively so that the lift requirement can be perfectly met with simple structure.
4. The middle parts of the first supporting arm 21 and the second supporting arm 22 are all hinged to a hinge shaft 23 such that the first supporting arm 21 and the second supporting arm 22 form an "X" shape, such structure has the following advantages.
   A. When the first supporting arm 21 and the second supporting arm 22 are parallel, they are in a closed state, that is, the supporting arms 21, 22 and the vertical lifters 40 thereon are located in the storage room 13; when the first supporting arm 21 and the second supporting arm 22 are arranged at a certain angle, they are in an open state, and the vertical lifters 40 will be outside the storage room 13; the "X" shaped structure is simple and facilitate gathering and spreading;
   B. The hinged portions of the first supporting arm 21 and the second supporting arm 22 will bear a large bending moment. Such "X" shaped structure thereof ensure sufficient bending strength and rigidity in the hinged portion of the first supporting arm 21 and the second supporting arm 22;
   C. Such "X" shaped structure formed by both the first supporting arm 21 and the second supporting arm 22 allows larger expanded plane during the open state and smaller compact space during closed state.
5. Each of the first supporting arm 21 and the second supporting arm 22 comprises the hinge segment 24, the first end arm 25 and the second end arm 26, the first end arm 25 and the second end arm 26 are arranged on opposite sides of the hinge shaft 23, ensuring the first supporting arm 25 and the second supporting arm 26 to be parallel during the closed state, to avoid more space being occupied due to incomplete gather thereof.
6. The first supporting arm 21 and the second supporting arm 22 all have a thickness, thus they cannot be in a same plane when they are hinge-jointed, which will affect the stability of the aircraft when it is vertically raised. During the installation, two vertical lifters 40 on the first supporting arms 21 are mounted on the bottom surface of the ends of the first supporting arms 21, and two vertical lifters 40 on the second supporting arms 22 are mounted on the top surface of the ends of the second supporting arms 22. This installation arrangement can ensure the four vertical lifters 40 being in a same horizontal plane to improve the stability of the aircraft.
7. The relative position between the first supporting arm 21 and the second supporting arm 22 are limited by the first pin 211 and the second pin 221 in the open state, to ensure the reliability of the aircraft during flight.
8. The first supporting arm 21 and the second supporting arm 22 are all provided with a first pin 211 and a second pin 221 respectively, the driving mechanism 30 may act on the first pin 211 and the second pin 221 that located on two opposite sides of the hinge shaft 23, then the first supporting arm 21 can rotate in reverse relative to the second supporting arm 22 to implement their gather or spread.
9. The driving mechanism 30 comprises a rotator 31, a slider 32 and a guider 33, when the rotator 31 rotates, the finger 311 pushes the slider 32 to slide in horizontal direction along the guider 33, whereby the first pin 211 and the second pin 221 bring the first supporting arm 21 and the second supporting arm 22 to spread out or gather together.
10. The hinge shaft 23 comprises an outer shaft 231 fixed to the first supporting arm 21, and an inner shaft 232 fixed to the second supporting arm 232. The sleeve structure of the outer shaft 231 has a larger thrust surface, which can reduce the possibility of skew or distortion between the first supporting arm 21 and the second supporting arm 22. Such sleeve structure is very important to ensure the reliability of the hinged portions.
11. Two doors 14 are located on opposite sides of the fuselage 10 to facilitate the deployable supporting mechanism gathering together and spreading out.

### Embodiment 2

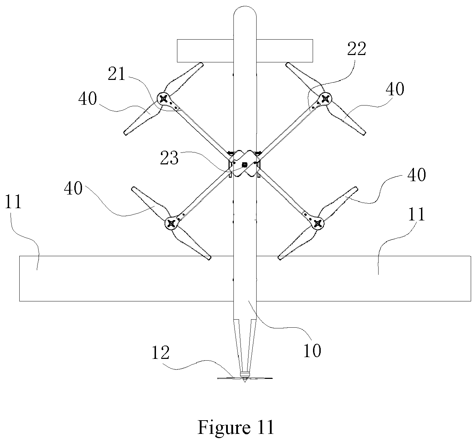

Referring to Fig. 11, the fixed-wing aircraft in this embodiment uses canard configuration, wherein the position of the hinge shaft 23 is located in front of the fixed wings on the fuselage, the principle and rest structures are same as embodiment 1.

The foregoing is merely the specific embodiments of the present invention, and is not intended to limit the protection scope of the present invention. Any replacement or improvement made without departing from the concept of the present invention as defined in the claims is within the protection scope of the present invention.

## Claims

1. A vertical take-off and landing fixed-wing aircraft, comprising a fuselage (10) provided with two fixed-wings (11) and a thruster (12);
a storage room (13) is configured inside the fuselage (10), a plurality of openings and their corresponding doors (14) are configured on the fuselage (10), and the openings are connected to the storage room (13);
a driving mechanism (142), and a deployable supporting mechanism driven by the driving mechanism (142) are arranged inside the storage room (13);
wherein the deployable supporting mechanism comprises a first supporting arm (21), two vertical lifters (40) are respectively mounted on outer ends of the first supporting arm (21);
the first supporting arm (21) comprises a first end arm (25), a second end arm (26) and a hinge segment (24) in the middle part of the first supporting arm (21), the first end arm (25) and the second end arm (26) are rigidly coupled via the hinge segment (24) on opposite sides of the hinge segment (24), the first supporting arm (21) is movably connected to the fuselage (10) at the hinge segment (24) via a hinge shaft (23);
wherein the deployable supporting mechanism further comprises a second supporting arm (22) including a first end arm (25), a second end arm (26) and a hinge segment (24) in the middle part of the first supporting arm (21), the first end arm (25) and the second end arm (26) are rigidly coupled via the hinge segment (24) on opposite sides of the hinge segment (24), two vertical lifters (40) are respectively mounted on outer ends of the second supporting arm (22);
each of the first supporting arm (21) and the second supporting arm (22) is movably hinged to the hinge shaft (23) via respective hinge segment (24), to form an "X" shape, the hinge shaft (23) is connected to the fuselage;
the fixed-wing aircraft has an open state and a closed state, in the open state, the doors open and the vertical lifters (40) spread out outside the storage room (13) through the doors (14), by the act of the deployable supporting mechanism, the vertical lifters (40) on the first supporting arm (21) are located on opposite sides of the fuselage (10), the vertical lifters (40) on the second supporting arm (22) are located on opposite sides of the fuselage (10); in the closed state, the vertical lifters (40) are located within the storage room (13) by act of the deployable supporting mechanism while the doors (14) closed.

2. The fixed-wing aircraft of claim 1, wherein the fuselage (10) is further provided with a horizontal rotation shaft (121), the thruster (12) is movable mounted to the fuselage (10) via the rotation shaft (121).

3. The fixed-wing aircraft of claim 1, the hinge segment (24) of the first supporting arm (21) is located above that of the second supporting arm (22), and each of the first supporting arm (21) and the second supporting arm (22) includes an upper surface and a lower surface, the vertical lifter (40) includes an installation base (41) and a rotary wing (42) that fixed on the installation base (41); two vertical lifters (40) on the first supporting arms (21) are mounted on the lower surface of the first supporting arm (21) via their installation base (41), and two vertical lifters (40) on the second supporting arms (22) are mounted on the upper surface of the second supporting arm (22) via their installation base (41).

4. The fixed-wing aircraft of claim 1, wherein positive stops are provided about the first supporting arm (21) and the second supporting arm (22), and the first supporting arm (21) and the second supporting arm (22) are spread out maximumly at a stop state.

5. The fixed-wing aircraft of claim 4, wherein the first supporting arm (21) and the second supporting arm (22) are provided with a first pin (211) and a second pin (221) respectively, and the first pin (211) and the second pin (221) are located on opposite sides of the hinge shaft (23); the positive stops comprise the first pin (211) and the second pin (221).

6. The fixed-wing aircraft of claim 5, wherein the driving mechanism (30) comprises a rotator (31), a slider (32) and a guider (33); the rotator (31) and the guider (33) are arranged on the fuselage (10), and the slider (32) is slid-fitted with the guider (33); the slider (32) is provided with a slot (323), and the rotator (31) is provided with a finger (311) which is inserted into the slot (323) and is deviated from the rotary axis of the rotator (31); a first slide element (321) and a second slide element (322) are arranged on the slider (32), the first pin (211) and the second pin (221) are inserted into the first slide element (321) and the second slide element (322) respectively.

7. The fixed-wing aircraft of claim 1, wherein the hinge shaft (23) comprises an outer shaft (231) fixed to the first supporting arm (21), and an inner shaft (232) fixed to the second supporting arm (22); the outer shaft (231) is sleeved on the inner shaft (232).

8. The fixed-wing aircraft of claim 1, wherein the doors (14) are two doors (14) which are respectively located on opposite sides of the fuselage (10).

## Patentansprüche

1. Vertikal startendes und landendes Starrflügelluftfahrzeug, umfassend einen Rumpf (10), der mit zwei Starrflügeln (11) und einem Triebwerk (12) bereitgestellt ist;
wobei ein Lagerraum (13) innerhalb des Rumpfes (10) konfiguriert ist, eine Vielzahl von Öffnungen und ihre entsprechenden Türen (14) an dem Rumpf (10) konfiguriert sind und die Öffnungen mit dem Lagerraum (13) verbunden sind;
wobei ein Antriebsmechanismus (142) und ein ausfahrbarer Stützmechanismus, der durch den Antriebsmechanismus (142) angetrieben wird, innerhalb des Lagerraums (13) angeordnet sind;
wobei der ausfahrbare Stützmechanismus einen ersten Stützarm (21) umfasst, wobei zwei vertikale Heber (40) jeweils an äußeren Enden des ersten Stützarms (21) montiert sind;
wobei der erste Stützarm (21) einen ersten Endarm (25), einen zweiten Endarm (26) und ein Scharniersegment (24) in dem Mittelteil des ersten Stützarms (21) umfasst, wobei der erste Endarm (25) und der zweite Endarm (26) starr über das Scharniersegment (24) an gegenüberliegenden Seiten des Scharniersegments (24) gekoppelt sind, wobei der erste Stützarm (21) beweglich mit dem Rumpf (10) an dem Scharniersegment (24) über eine Scharnierwelle (23) verbunden ist;
wobei der ausfahrbare Stützmechanismus ferner einen zweiten Stützarm (22) umfasst, der einen ersten Endarm (25), einen zweiten Endarm (26) und ein Scharniersegment (24) in dem Mittelteil des ersten Stützarms (21) beinhaltet, wobei der erste Endarm (25) und der zweite Endarm (26) starr über das Scharniersegment (24) an gegenüberliegenden Seiten des Scharniersegments (24) gekoppelt sind, wobei zwei vertikale Heber (40) jeweils an äußeren Enden des zweiten Stützarms (22) montiert sind;
wobei jeder von dem ersten Stützarm (21) und dem zweiten Stützarm (22) beweglich an der Scharnierwelle (23) über ein jeweiliges Scharniersegment (24) angelenkt ist, um eine "X"-Form zu bilden, wobei die Scharnierwelle (23) mit dem Rumpf verbunden ist;
wobei das Starrflügelluftfahrzeug einen offenen Zustand und einen geschlossenen Zustand aufweist, wobei in dem offenen Zustand sich die Türen öffnen und sich die vertikalen Heber (40) außerhalb des Lagerraums (13) durch die Türen (14) ausbreiten, durch die Wirkung des ausfahrbaren Stützmechanismus, wobei sich die vertikalen Heber (40) an dem ersten Stützarm (21) auf gegenüberliegenden Seiten des Rumpfes (10) befinden, wobei sich die vertikalen Heber (40) an dem zweiten Stützarm (22) auf gegenüberliegenden Seiten des Rumpfes (10) befinden; wobei in dem geschlossenen Zustand sich die vertikalen Heber (40) innerhalb des Lagerraums (13) befinden, durch Wirkung des ausfahrbaren Stützmechanismus, während die Türen (14) geschlossen sind.

2. Starrflügelluftfahrzeug nach Anspruch 1, wobei der Rumpf (10) ferner mit einer horizontalen Drehwelle (121) bereitgestellt ist, wobei das Triebwerk (12) über die Drehwelle (121) beweglich an dem Rumpf (10) montiert ist.

3. Starrflügelluftfahrzeug nach Anspruch 1, wobei sich das Scharniersegment (24) des ersten Stützarms (21) über demjenigen des zweiten Stützarms (22) befindet und jeder von dem ersten Stützarm (21) und dem zweiten Stützarm (22) eine obere Fläche und eine untere Fläche beinhaltet, wobei der vertikale Heber (40) eine Installationsbasis (41) und einen Drehflügel (42) beinhaltet, der an der Installationsbasis (41) befestigt ist; wobei zwei vertikale Heber (40) an den ersten Stützarmen (21) an der unteren Fläche des ersten Stützarms (21) über ihre Installationsbasis (41) montiert sind, und zwei vertikale Heber (40) an den zweiten Stützarmen (22) an der oberen Fläche des zweiten Stützarms (22) über ihre Installationsbasis (41) montiert sind.

4. Starrflügelluftfahrzeug nach Anspruch 1, wobei Festanschläge um den ersten Stützarm (21) und den zweiten Stützarm (22) bereitgestellt sind und der erste Stützarm (21) und der zweite Stützarm (22) in einem Anschlagszustand maximal ausgebreitet sind.

5. Starrflügelluftfahrzeug nach Anspruch 4, wobei der erste Stützarm (21) und der zweite Stützarm (22) jeweils mit einem ersten Stift (211) und einem zweiten Stift (221) bereitgestellt sind und sich der erste Stift (211) und der zweite Stift (221) auf gegenüberliegenden Seiten der Scharnierwelle (23) befinden; wobei die Festanschläge den ersten Stift (211) und den zweiten Stift (221) umfassen.

6. Starrflügelluftfahrzeug nach Anspruch 5, wobei der Antriebsmechanismus (30) einen Rotator (31), einen Schieber (32) und eine Führung (33) umfasst; wobei der Rotator (31) und die Führung (33) auf dem Rumpf (10) angeordnet sind und der Schieber (32) mit der Führung (33) verschiebbar verbunden ist; wobei der Schieber (32) mit einem Schlitz (323) bereitgestellt ist, und der Rotator (31) mit einem Finger (311) bereitgestellt ist, der in den Schlitz (323) eingeführt ist und von der Drehachse des Rotators (31) abweicht; wobei ein erstes Schieberelement (321) und ein zweites Schieberelement (322) an dem Schieber (32) angeordnet sind, wobei der erste Stift (211) und der zweite Stift (221) jeweils in das erste Schieberelement (321) und das zweite Schieberelement (322) eingeführt sind.

7. Starrflügelluftfahrzeug nach Anspruch 1, wobei die Scharnierwelle (23) eine äußere Welle (231), die an dem ersten Stützarm (21) befestigt ist, und eine innere Welle (232) umfasst, die an dem zweiten Stützarm (22) befestigt ist; wobei die äußere Welle (231) auf die innere Welle (232) aufgeschoben ist.

8. Starrflügelluftfahrzeug nach Anspruch 1, wobei die Türen (14) zwei Türen (14) sind, die sich jeweils auf gegenüberliegenden Seiten des Rumpfes (10) befinden.

## Revendications

1. Aéronef à voilure fixe à décollage et atterrissage verticaux, comprenant un fuselage (10) doté de deux voilures fixes (11) et d'un propulseur (12) ;
un compartiment de stockage (13) est conçu à l'intérieur du fuselage (10), une pluralité d'ouvertures et leurs portes (14) correspondantes sont conçues sur le fuselage (10), et les ouvertures sont reliées au compartiment de stockage (13) ;
un mécanisme d'entraînement (142) et un mécanisme de support déployable entraîné par le mécanisme d'entraînement (142) sont agencés à l'intérieur du compartiment de stockage (13) ; ledit mécanisme de support déployable comprenant un premier bras de support (21), deux dispositifs de levage verticaux (40) étant respectivement montés sur des extrémités externes du premier bras de support (21) ;
le premier bras de support (21) comprend un premier bras d'extrémité (25), un second bras d'extrémité (26) et un segment d'articulation (24) dans la partie médiane du premier bras de support (21), le premier bras d'extrémité (25) et le second bras d'extrémité (26) sont couplés rigidement par l'intermédiaire du segment d'articulation (24) sur des côtés opposés du segment d'articulation (24), le premier bras de support (21) est relié de manière mobile au fuselage (10) au niveau du segment d'articulation (24) par l'intermédiaire d'un arbre d'articulation (23) ;
ledit mécanisme de support déployable comprenant en outre un second bras de support (22) comprenant un premier bras d'extrémité (25), un second bras d'extrémité (26) et un segment d'articulation (24) dans la partie médiane du premier bras de support (21), ledit premier bras d'extrémité (25) et ledit second bras d'extrémité (26) étant couplés rigidement par l'intermédiaire du segment d'articulation (24) sur des côtés opposés du segment d'articulation (24), deux dispositifs de levage verticaux (40) étant respectivement montés sur les extrémités externes du second bras de support (22) ;
chacun du premier bras de support (21) et du second bras de support (22) est articulé de manière mobile à l'arbre d'articulation (23) par l'intermédiaire d'un segment d'articulation (24) respectif, pour former une forme en « X », l'arbre d'articulation (23) est relié au fuselage ;
l'aéronef à voilure fixe possédant un état ouvert et un état fermé, dans l'état ouvert, les portes s'ouvrent et les dispositifs de levage verticaux (40) s'étendent à l'extérieur du compartiment de stockage (13) à travers les portes (14), sous l'action du mécanisme de support déployable, les dispositifs de levage verticaux (40) sur le premier bras de support (21) sont situés sur des côtés opposés du fuselage (10), les dispositifs de levage verticaux (40) sur le second bras de support (22) sont situés sur des côtés opposés du fuselage (10) ; dans l'état fermé, les dispositifs de levage verticaux (40) sont situés à l'intérieur du compartiment de stockage (13) sous l'action du mécanisme de support déployable pendant que les portes (14) sont fermées.

2. Aéronef à voilure fixe selon la revendication 1, ledit fuselage (10) étant en outre doté d'un arbre de rotation horizontal (121), ledit propulseur (12) étant monté mobile sur le fuselage (10) par l'intermédiaire de l'arbre de rotation (121).

3. Aéronef à voilure fixe selon la revendication 1, ledit segment d'articulation (24) du premier bras de support (21) étant situé au-dessus de celui du second bras de support (22), et chacun du premier bras de support (21) et du second bras de support (22) comprenant une surface supérieure et une surface inférieure, ledit dispositif de levage vertical (40) comprenant une base d'installation (41) et une voilure rotative (42) fixée sur la base d'installation (41) ; deux dispositifs de levage verticaux (40) sur les premiers bras de support (21) étant montés sur la surface inférieure du premier bras de support (21) par l'intermédiaire de leur base d'installation (41), et deux dispositifs de levage verticaux (40) sur les seconds bras de support (22) étant montés sur la surface supérieure du second bras de support (22) par l'intermédiaire de leur base d'installation (41).

4. Aéronef à voilure fixe selon la revendication 1, des butées positives étant prévues autour du premier bras de support (21) et du second bras de support (22), et ledit premier bras de support (21) et ledit second bras de support (22) étant étendu au maximum à l'état en butée.

5. Aéronef à voilure fixe selon la revendication 4, ledit premier bras de support (21) et ledit second bras de support (22) étant dotés d'une première broche (211) et d'une seconde broche (221) respectivement, et ladite première broche (211) et ladite seconde broche (221) étant situées sur des côtés opposés de l'axe d'articulation (23) ; lesdites butées positives comprenant la première broche (211) et la seconde broche (221).

6. Aéronef à voilure fixe selon la revendication 5, ledit mécanisme d'entraînement (30) comprenant un rotateur (31), un coulisseau (32) et un guide (33) ; ledit rotateur (31) et ledit guide (33) étant agencés sur le fuselage (10), et ledit coulisseau (32) étant ajusté coulissant avec le guide (33) ; ledit coulisseau (32) étant doté d'une fente (323), et ledit rotateur (31) étant doté d'un doigt (311) qui est inséré dans la fente (323) et est dévié de l'axe de rotation du rotateur (31) ; un premier élément coulissant (321) et un second élément coulissant (322) étant agencés sur le coulisseau (32), ladite première broche (211) et ladite seconde broche (221) étant insérées dans le premier élément coulissant (321) et le second élément coulissant (322) respectivement.

7. Aéronef à voilure fixe selon la revendication 1, ledit arbre d'articulation (23) comprenant un arbre externe (231) fixé au premier bras de support (21), et un arbre interne (232) fixé au second bras de support (22) ; ledit arbre externe (231) étant emmanché sur l'arbre interne (232).

8. Aéronef à voilure fixe selon la revendication 1, lesdites portes (14) étant deux portes (14) qui sont respectivement situées sur des côtés opposés du fuselage (10).
